# EUROPEAN PATENT APPLICATION

(11) **EP 1 541 642 A1**
(43) Date of publication of application: **15.06.2005**
(21) Application number: 04257216.4
(22) Date of filing: 20.11.2004
(51) Int. Cl.: C09D 5/03, B05D 5/06

(54) **Markable powder coating comprising a magnetic interference pigment**

(30) Priority: 05.12.2003 US 527247 P
(71) Applicant: Rohm and Haas Company, Philadelphia, Pennsylvania 19106-2399 (US)
(72) Inventor: Hoffman, Rene Christopherous, Valparaiso Indiana 60525 (US); Jackson, Michael Louis, LaGrange Illinois 60525 (US); Sopcich, Nicholas Joseph, Demotte Indiana 46310 (US)
(74) Representative: Buckley, Guy Julian

(57) **Abstract**

According to the present invention, methods of marking in a substrate comprises placing one or more than one magnet adjacent to a substrate while it is being powder coated or after it is powder coated and while the coating is uncured, thereby orienting a magnetic pigment with the magnet having a desired shape to form a desired marking, followed by heating or curing to form a coating film. In another embodiment, the present invention provides marked powder coated substrates in a variety of shapes comprising one or more than one marking formed by orienting a magnetic pigment or interference pigment in a powder coating or by orienting an interference pigment in a liquid coating. In yet another embodiment, the present invention provides markable powder coating compositions comprising magnetic pigments, as well as powder coating compositions comprising interference pigments, such as color shifting pigments.

## Description

The present invention relates to a method of marking a coated substrate and coated articles formed thereby, as well as to *in situ* markable powder coating compositions comprising magnetic pigments. More specifically, the present invention relates to marking a powder coating layer by orienting a magnetic pigment and to magnetically marked coatings, as well as to magnetically marked coatings comprising interference pigments.

### BACKGROUND

Heretofore, magnetic fields have been used to create patterns in wet liquid coatings containing magnetic materials by moving or orienting the magnetic materials along the magnetic field lines to form a pattern. In this method, the artisan maintains the fluid state of the paint medium until the moving and the change of the orientation of the magnetic bodies are completed. However, the coatings used in these methods have thus far comprised solvents and other volatile organic compounds (VOCs) which rapidly volatilize to dry the coating or they comprise viscous high solids water borne coatings. As a consequence, it has been imperative to carry out the magnetic pattern forming method at high speed because of the fast drying of the liquid coating medium. Further, with liquid coatings, it has been difficult to apply the magnetic pattern forming method to a surface inclined with respect to the horizontal plane. Moreover, the magnetic pattern forming method has been practiced with rigid and heavy, and often brittle, permanent magnets as well as flat sheet magnets which can only accommodate the surfaces of flat or only slightly contoured substrates. Still further, solvents and VOCs in coatings processed via the magnetic pattern forming method present health and environmental hazards.

U.S. 5,079,058, to Tomiyama et al., discloses a method for forming patterns to be placed on other objects that have irregular or rounded surfaces. The method comprises forming with a magnet disposed adjacent a substrate a pattern in a wet film forming layer comprising a magnetic material, wherein the film forming layer rests on a releasable adhesive base film, followed by drying the film and cutting it to a desired shape, e.g. a letter, and placing it on a desired article as a decal. This method allows one to place magnetically formed patterns on articles having a variety of shapes, so long as the decal will stick to the article. However, Tomiyama et al. do not address the problem of movement or orientation of magnetic bodies to form a pattern prior to the drying of a magnetic pigment containing film forming liquid or the problem of forming patterns in substrates inclined with respect to the horizontal plane. Further, Tomiyama et al. fail to provide patterns formed *in situ* in coatings, depending instead on the adhesion of a decal to a substrate. Still further, in Tomiyama et al. there remains a toxicity problem with the use of VOCs in liquid coatings. Moreover, overspray from liquid coatings of any kind cannot be reclaimed or recycled only at costs greater than the coating materials themselves.

In accordance with the present invention, the inventors have discovered methods that move or orient magnetic materials in a coating to form markings with in a film layer on a substrate independent of drying time, horizontal or vertical repose, and largely independent of substrate shape, thereby enabling a more flexible marking method. Further, the present inventors have discovered methods that enable the formation of such markings with the use of little or no VOCs or toxic compounds.

### STATEMENT OF THE INVENTION

The present invention provides methods of marking thermoplastic or curable coatings on a substrate comprising providing one or more than one magnet in a desired shape or form, placing the one or more than one magnet adjacent to a substrate while it is being powder coated or after it is powder coated and while the coating is uncured, thereby orienting a magnetic pigment with the magnet having a desired shape to form a desired pattern, i.e. *in situ,* followed by curing or heating to form a coating film. In another embodiment, the present invention provides marked powder coated substrates in a variety of shapes comprising one or more than one pattern formed by orienting a magnetic pigment contained in the powder coating. In yet another embodiment, the present invention provides *in situ* markable powder coating compositions comprising magnetic pigments, interference pigments, such as color shifting pigments, and mixtures thereof.

### DETAILED DESCRIPTION

Orienting magnetic pigments in powder coatings by placing one or more than one magnet adjacent to the front or rear side of a substrate during or after applying powder coating to the substrate, followed by curing to form a coating provides powder coatings marked in the shape of the outline of the magnet. An uncured and, thus, flowable powder coating layer comprising magnetic pigment can be made to stick electrostatically to a substrate, even to vertical surfaces of a substrate or to a substrate that is hanged for coating. Therefore, such a powder coated substrate can be magnetically marked at any desired amount of time, e.g. during any period over which the applied powder is stable or unreacted, such as up to twenty four hours, prior to curing the coating.

Herein, unless otherwise indicated, percentages are by weight. Further, unless otherwise indicated, the total amount of resins and other components in the powder compositions of the present invention are expressed as weight parts relative to 100 parts by weight of the resin (phr).

All limitations and ranges recited herein are inclusive and combinable. Thus, if resin A is said to be useful in an amount of 20 phr or more, for example, 40 phr or more, or 50 phr or more, and, separately, resin A is said to be useful in the amount of less than 90 phr, for example, less than 80 phr, then resin A may, alternatively be used in amounts of from 20 to 80 phr, from 20 to 90 phr, from 40 to 80 phr, from 40 to 90 phr, from 50 to 80 phr, from 50 to 90 phr, from 20 to 40 phr, from 20 to 50 phr, from 80 to 90 phr, or in amounts of from 40 to 50 phr. As used herein, the phrase "acid number" refers to the number of mg KOH required to neutralize the alkali-reactive groups in 1 g of polymer and has the units (mg KOH/g polymer). The acid number is determined according to ASTM standard test method D 1639-90.

As used herein, unless otherwise indicated, the phrase "acrylic" means acrylic or methacrylic, and the phrase "acrylate" means acrylate or methacrylate, or any mixture or combination thereof.

As used herein, the phrase "average particle size or diameter", refers to particle diameter as determined by laser light scattering using a Malvern Instruments, Malvern, PA, device located at the Rohm and Haas Powder Coatings Reading, PA Facility, Equipment Serial #: 34315-33.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the term "hard magnets" or "permanent magnets" refers to any material that exhibits ferromagnetic properties and that has a long lasting remanence after exposure to a magnetizing force.

As used herein, the term "heating or curing" or "curing or heating" refers, respectively, to curing one or more than one thermally or radiation curable polymer or resin in one or more than one layer to form a coating, and to heating one or more than one thermoplastic polymer or resin in one or more than one layer to form a coating.

As used herein, the phrase "hydroxyl number" refers to the number of milligrams (mg) of KOH equivalent to the hydroxyl groups present in each gram (g) of polymer and has the units (mg KOH/g polymer).

As used herein, unless otherwise indicated, the phrase "per hundred parts resin" or "phr" means the amount, by weight, of an ingredient per hundred weight parts of the total amount of resin or polymer contained in a coating powder, including cross-linking resins.

As used herein, unless otherwise indicated, the phrase "polymer" or "resin" includes, independently, polymerizable materials including reactive monomers or oligomers, as well reactive and unreactive polymers, copolymers, terpolymers, block copolymers, segmented copolymers, prepolymers, graft copolymers, and any mixture or combination thereof.

As used herein, the term "soft magnets" refers to any material exhibiting ferromagnetic properties but having a remanence that is substantially zero after exposure to a magnetic force.

As used herein, the phrase "wt. %" stands for weight percent.

Powder coatings may be applied electrostatically or via fluid bed or magnetic brush to a desired substrate, thereby sticking as powders to grounded substrates that are at least partly conductive, such as wood or engineered wood (due to moisture), such as MDF (medium density fiberboard), metal or glass electrically, or, alternatively, sticking to charged dielectric substrates such as plastic, paper or cardboard. Grounding may be done simply by placing behind the substrate, attaching to the substrate or contacting the substrate with a conductive metal member, such as a hook or metal ribbon, or natural wood member. Further, substrates such as wood or plastic may be pre-treated with aqueous or solvent solutions or dispersions of a charge controlling agent, e.g. aluminum oxide or metal oxides, or metal phosphates, such as alkali(ne) metal or magnesium phosphate. Still further paper, cardboard or dried wood substrates may be sized with an aqueous cationic polymers or organic sizing agents, such as quaternized ammonium (alk)acrylamide polymers, quaternized N,N-dimethylaminoethyl (meth)acrylate copolymers and terpolymers, aminopolyamide-epichlorohydrin resins, starch, colophony, thermoplastic polyamides and amide waxes, polyalkylene-polyamine-epichlorohydrin resins, poly(diallylamino)-epichlorohydrin resins, ion exchange resins, or quaternary ammonium salts of fats, such as tallow, and hydrophobically modified clays, such as trialkylarylammonium hectorites and smectites, and mixtures thereof. Yet still further, plastic substrates may be pre-treated with aqueous or solvent borne primers, dispersions or solutions of paper sizing agents or conductive materials. Yet even still further, paper or plastic sheets may be charged for use as substrates by contacting them with a charged metal roller, such as a roller found in an electrophotographic copier or printer.

During or after coating, magnets may be held against a substrate from the rear side or side not coated to effect marking. Such magnets may be held on stands or conveyors which support substrates on their rear side or they may be taped to or adhered to the rear side of substrates. In addition, such magnets may rest on rollers or stands over which coated substrates are conveyed to create continuous markings in substrates, such as stripes and waves.

Magnets may be held on stands in front of coated substrates, as close as is practicable to the coated substrates without touching them. Magnets may desirably be placed in front of coated dielectric substrates, such as plastic, or any substrate that may be thick enough to insulate the coating layer from a magnetic field generated on the opposite side of the substrate, e.g. 1 mm or more plastic. Magnets may also be placed on conveyors or rollers which, when positioned as desired, can be lowered close to the coated substrate surface to create a discrete marking, as when the magnet is not moving, or to create a continuous marking, as when the magnet is moving.

Magnets may be hard, permanent magnets manufactured in a desired shaped, or they may advantageously be made of shapeable polymer rubbers or magnetic particles dispersed in moldable or shapeable plastic or rubber matrices, including nitrile rubber, or thermoformable polyethylene, NORDEL® EPDM (ethylene-propylene-diene) rubber (R. T. Vanderbilt Co., Inc., Norwalk, Conn.), and synthetic polyisoprenes such as NATSYN® 2210, available from Goodyear Tire and Rubber Co., Akron, Ohio. Such rubber or plastic magnet dispersions may comprise ferrite, neodymium-iron-boron, or other magnetic dispersands. Thermoformable magnetic materials, such as those made in high density polyethylene (HDPE) or other thermoplastics, may be formed or molded to any shape. In addition, rubber or polymer magnets may be ground, lathed, milled, cut, drilled or punched to any desired shape, and may further be formed by extrusion to a desired profile, Further, polymer or rubber magnets may be shaped or formed by being ground, lathed, milled, cut, drilled or punched to any desired shape, profile, or both. For example, desirable magnet profiles may comprise a curve having any desired radius of curvature or a compound curve to fit against either the front or the rear surface of any substrate having any desired radius of curvature or shape, such as cornice moldings, furniture or cabinet panel recesses or grooves, automotive parts and trim, plastic or rubber shaped articles, and lathed or milled wood. Accordingly, magnets that have been thus profiled may have a desired shape so that, for example, a product brand or style can be marked on a coated substrate, such as an automobile bumper or trim piece, an automotive quarter panel, a cell phone, a laptop case, or any article which is not flat. An example of a suitable magnet is any PLASTIFORM™ magnet, available from ARNOLD™ Magnetic Products Group of SPS Technologies, Norfolk, Nebraska.

Suitable magnets provide magnetic fields having a strength of from 100 Gauss to 5,000 Gauss, as measured through a substrate, for example, from 300 Gauss to 2,000 Gauss. Magnetic strength may desirably be increased for use with coated metal substrates and for use on the rear or uncoated side of substrates greater than 2 mm thick. The number of magnetic poles is not critical and a given magnet or magnetic sheet may desirably have only one North and one South pole. Thus, the invention may be carried out using single pole magnets and such magnets may desirably be cut into two or more pieces to form a desired design.

In an embodiment of the present invention, sheet magnets may easily be cut to given shapes to provide a desired pattern. Many cutouts of sheet magnets may be placed adjacent to any substrate to create multiple markings, e.g. to spell out a name, security code or logo, or to make numbers, and outlines of figures, such as, for example, animals, cartoon characters or famous landmarks.

If desired, variations in color, reflectance or brightness in the marking formed may be achieved by providing color shifting or interference pigments in markable powder coatings or in liquid coatings.

In another embodiment of the invention, marked products may include products having thereon single or multilayer coatings, such as a basecoat layer, a colorcoat layer and a clearcoat layer wherein the magnetic pigmented coating comprises one or more than one layer of the coating. For example, magnetic pigments may be comprised in a color coat layer having a clearcoat layered thereover, or it may be comprised as a tint or additive in the clearcoat itself, or both. Multilayer powder coatings can be marked and then cured layer by layer, or at least two layers may be applied at once, with or followed by marking, and then curing or heating the marked coating. Such multilayer marked coatings may be formed from powder coatings or liquid coatings. Multilayer coatings may also comprise both liquid and powder coating layers provided that no powder layer is applied on any uncured, marked liquid layer and that no liquid layer is applied on uncured, marked powder layer.

In another embodiment, the present invention provides markable powder and liquid coating compositions comprising interference pigments, such as color shifting pigments. Such compositions provide a marked powder or liquid coated product having a three dimensional optical variation in color, reflectance or brightness regardless of the angle at which it is viewed.

Suitable powder coating compositions may comprise one or more than one resin having a Tg of at least 35°C, or 40°C or more, or 45°C or more. Such resins may include thermally curable epoxy resins, polyesters, urethanes, acrylics and silicones, as well as radiation curable acrylic polymers, unsaturated polyester resins, and vinyl ether resins curable by, e.g. visible light, near infrared (NIR), microwave, electron beam or ultraviolet (UV) light, and, in addition, thermoplastic polyamide, polyolefin or polyvinylidene fluoride (PVDF) resins, as well as mixtures and hybrids thereof. Thermoplastic powder coatings may be fused and flowed out to form coatings in the absence of any curing agent or catalyst.

Suitable epoxy resins may include, for example, aliphatic or aromatic epoxy resins, including the reaction products of halohydrins and aliphatic glycols, diphenols or polyphenols, such as at least one of the foregoing types of epoxides, such as bisphenol A, bisphenol F, bisphenol S, and the like. Epoxy resins may be induction heat cured and may be cationically cured in the presence of a cationic initiator and heat of induction, even in the absence of a catalyst, i.e. a Lewis acid or base.

Exemplary epoxy resins may include bisphenol A epoxy resins and polyphenylether diol epoxy resins. Such resins may be have a melt viscosity of from 300 to 4000 centipoises at 150°C and may have an epoxide equivalent weight (eew) of from 300 to 1500.

One and two component epoxy systems may be used, including low temperature thermal curing systems that cure at from 100°C to 150°C and which find advantageous use on paper, plastic, cardboard, wood and heat sensitive substrates. Thermally labile epoxy curing agents may include amines, phenolics, imidazoles, cyclic amidines, dicyandiamides, carboxylic acids and anhydrides, as well as storage stable low temperature curing epoxy amine, epoxy imidazole, epoxy acid/anhydride, or epoxy amidine adducts, for example, epoxy adducts of primary or secondary aliphatic polyamines which are solid at 27°C. A two component epoxy system may comprise 1 to 8 phr of imidazole, cyclic amidines and epoxy adducts thereof mixed with the epoxy resins and, separately, 2 to 40 phr of epoxy adducts of aliphatic polyamines as curing agents. A one component epoxy system may comprise epoxy resin mixed with 2 to 40 phr of epoxy adducts of aliphatic polyamines, carboxylic acids or anhydrides, or with 1 to 8 phr of epoxy imidazole adducts as curing agents.

Suitable polyesters may comprise carboxylic acid functional or hydroxyl functional polyesters, the weight average molecular weight (Mw) of which ranges from 1,000 to 40,000, for example, from 2,000 to 7,000, or from 2,500 to 5,000. Polyesters, whether unsaturated or thermally cured, may have an acid number of from 1 to 80, for example 30-80, or a hydroxyl number of from 5 to 100, for example 20 to 80, and may comprise both acid and hydroxyl functions. Polyesters may be formed in conventional manner from carboxylic acids (or their anhydrides) having acid functionalities of 2 or greater and polyols having hydroxyl functionality of 2 or greater. Examples of suitable multi-functional carboxylic acids include benzene-1,2,4-tricarboxylic acid, phthalic acid, tetrahydrophthalic acid, hexahydrophthalic acid, endobicyclo-2,2,1-5-heptyne-2,3-dicarboxylic acid, tetrachlorophthalic acid, cyclohexanedioic acid, isophthalic acid, terephthalic acid, trimesic acid, 3,6- dichlorophthalic acid, tetrachlorophthalic acid, benzophenone dicarboxylic acid, diphenic acid, 4,4-dicarboxydiphenyl ether, 2,5-pyridine dicarboxylic acid, trimellitic acid, pyromellitic anhydride, azelaic acid, maleic acid, succinic acid, adipic acid, sebacic acid, glutaric acid, pimelic acid, suberic acid, azelaic acid, diglycolic acid, 1,12-dodecanoic acid, tetrapropenyl succinic acid, maleic acid, fumaric acid, itaconic acid, malic acid, and like carboxylic acids. Examples of suitable multi-functional alcohols include glycerin, trimethylolpropane, trimethylolethane, trishydroxyethylisocyanurate, pentaerythritol, ethylene glycol, diethylene glycol, propylene glycol, trimethylene glycol, neopentyl glycol, 1,3-, 1,2- and 1,4-butanediols, heptanediol, hexanediol, octanediol, 2,2-'bis (4- cyclohexanol) propane, neopentyl glycol, 2,2,3-trimethylpentane-1,3-diol, 1,4-dimethylolcyclohexane, 2,2,4-trimethylpentane diol, 2-n-butyl-2-ethyl-1,3-propanediol, etc. To obtain carboxyl-functional polyesters of desired molecular weight, the monomer mixture used to form the polyester has an appropriate excess of carboxyl functionality to hydroxyl functionality. To obtain hydroxyl-functional polyesters of desired molecular weight, the monomer mixture used to form the polyester has an appropriate excess of hydroxyl functionality to carboxyl functionality.

Exemplary weatherable polyester resins may comprise the polymerization reaction product of dicarboxylic acids, glycols and monomers of functionality of three or higher, such that the dicarboxylic acids comprise at least 75 mole % of isophthalic acid and at least 5 mole % of 1,4-cyclohexane dicarboxylic acid, for example, from 75 to 90 mole % of isophthalic acid and from 10 to 25 mole % of 1,4- cyclohexane dicarboxylic acid.

Polyesters, including unsaturated polyesters, containing free carboxylic acid groups may be heat cured by condensation and may be mixed with from 2 to 40 phr, for example, from 3 to 20 phr, of curing agents, such as β-hydroxyalkylamides, epoxy resins, hydroxyl functional acrylic resins, aliphatic oxirane compounds, such as oxetanes, or triglycidyl isocyanurates (TGIC). Polyesters, including unsaturated polyesters, containing any free hydroxyl groups groups may be heat cured by condensation and may be mixed with from 2 to 40 phr, for example, from 3 to 20 phr, of curing agents, such as acid functional acrylic resins, carboxylic acids and anhydrides, blocked isocyanates and uretdiones, aminoplasts, e.g. melamines, and tetramethoxymethyl glycoluril. Polyesters containing free carboxylic acid and hydroxyl groups may be cured by a combination of curing agents.

Suitable thermally curable acrylic resins may comprise the reaction product of from 0.1 to 10 weight % of carboxylic acid or hydroxyl functional comonomers or both, based on the weight of all monomers used to form the resin, and may comprise the reaction product of up to 10% by weight of other comonomers, based on the weight of all monomers used to form the resin. Further, glycidyl (meth)acrylates may comprise 0.1 or more wt. %, for example, 1 wt. % or more, or 5 wt. % or more, or 10 wt. % or more, or 20 wt. % or more of glycidyl functional comonomers, based on the weight of all monomers used to form the resin, and may comprise the reaction product of 70 wt. % or less, for example, 55 wt.% or less, or 40 wt. % or less of glycidyl functional comonomers. The remainder of the monomers used to the acrylic resins of the present invention may comprise alkyl (meth)acrylates and. Exemplary alkyl (meth)acrylates may include 1 to 8 carbon alkyl esters of acrylic and methacrylic acid, such as methyl acrylate, methyl methacrylate, ethyl acrylate, acrylic acid, methacrylic acid, butyl acrylate, butyl methacrylate, etc. Styrene or alpha-methyl styrene comonomers may also be incorporated, particularly to increase glass transition temperature of the acrylic copolymer. One suitable glycidyl functional acrylic copolymer (GMA) comprises a random copolymer of methyl methacrylate, glycidyl acrylate, and styrene having a glycidyl equivalent weight of from 290 to 310. GMA polymers and epoxy resins form useful chemical resistant and flexible hybrid coatings.

As for curing agents, carboxylic acid functional acrylic resins may be cured with epoxy resins, hydroxyl-functional acrylic resins may be cured with blocked isocyanates and uretdiones, aminoplasts, e.g. melamines, tetramethoxymethyl glycoluril, or acid anhydrides, and epoxy-functional acrylic resins may be cured with dicarboxylic acids, polyesters and polyanhydrides. Curing agents and acrylic resins should be mixed in stoichiometries of 0.7:1.0 to 1.4:1.0 of the curing agent functionality to the reactive acrylic functionality.

Suitable silicone resins may have a viscosity of between about 500 and about 10,000 cps at 150°C, preferably 2000 to 5000 cps. Suitable organosilicone resins comprise organic groups, such as monovalent hydrocarbons, and hydrolyzable substituents, including silanol groups, hydroxyl groups, alkoxy groups and (alkyl)aryloxy groups, as well as siloxanes or silsesquioxanes substituted with monovalent hydrocarbons, hydroxyl groups, alkoxy groups and (alkyl)aryloxy groups. Hydrolyzable groups, such as a silanol functionality (Si--O--H), may comprise a content of 0.25 wt. % or more, for example, 0.5 wt. or more, or 1 wt. % or more, or 1.3 wt. % or more, or 2.5 wt. % or more, or 3 wt. % or more, based on the total weight of the silicone resin, and may range as high as 7 wt. %, or as high as 5 wt. %, based on the total weight of the silicone resin. Examples of monovalent hydrocarbons include phenyl, methyl, C₂ through C₂₄ alkyl or (alkyl)aryl, and mixtures thereof.

Among the silicone resins useful in the present invention are compounds of formula (1):

RₓR_{y}SiO_{(4-x-y)/2} (1)

wherein each of Rₓ and R_{y} is independently a monovalent hydrocarbon group, another group of formula (I), or OR¹, wherein R¹ is H or an alkyl or an aryl group having 1 to 24 carbon atoms, and wherein each of x and y is a positive number such that 0.8≤(x+y)≤4.0. Exemplary silicone resin compositions may include organo-siloxanes comprising units including dimethyl, diphenyl, methylphenyl, phenylpropyl and their mixtures, for example, a mixture of methyl and phenyl groups, e.g. poly(methylphenylsiloxane), wherein the ratio of phenyl to methyl groups is 0.5 to 1.5:1, more preferably 0.7:1 to 1.1:1.

It may be desirable to substantially remove residual organic solvent from a silicone resin. The silicone resin of the present invention should contain 0.2 wt. % or less of organic solvents, preferably 0.1 wt. % or less. This may be accomplished by flaking, i.e. melting the silicone resin and removing solvent from the molten resin, e.g., by sparging with a gas, such as nitrogen, or by vacuum.

Silicone resins provide heat resistant powder coatings and may be combined in the amount of 40 to 90 phr with 10 to 60 phr of polyesters, epoxy resins, such as GMA, or their mixtures to enhance the adhesion of the coating to the substrate.

Radical or ultraviolet (UV) curable polymers or resins generally may be acrylourethane resins, acrylate terminated polyester, unsaturated polyester resins, blends of acrylourethane resins and unsaturated polyester resins, combinations comprising acrylourethane resins and/or unsaturated polyester resins, and the like. Acrylourethane resins may comprise acrylic terminated urethanes or urethane prepolymers. Powder coatings comprising these resins may further comprise a curing agent such as a divinyl ether or a di(meth)acrylate terminated polymer, e.g. acrylated polyester or polyurethane.

Suitable unsaturated polyester resins may have a degree of unsaturation between 2 and 20 weight percent (wt. %). Unsaturated polyesters may be formed in a conventional manner from di- or polyfunctional carboxylic acids (or their anhydrides) and di- or polyhydric alcohols, e.g. glycols such as neopentyl glycol and dipropylene glycol. The unsaturation is typically supplied by the carboxylic acid, although it is possible to supply it through the alcohol. Monohydric alcohols or monofunctional carboxylic acids, such as (meth) acrylic acids or their esters, may be employed for chain termination purposes. Suitable ethylenically unsaturated di- or polyfunctional carboxylic acids (or their anhydrides) include, for example, maleic anhydride, fumaric acid, or their mixtures. Aromatic and saturated acids, such as those used to make condensation curing polyesters may also be employed in conjunction with the unsaturated acids to reduce the density of the ethylenic unsaturation and provide the desired chemical and mechanical properties. Coatings made with unsaturated polyesters may be cured with from 2 to 40 phr, for example from 4 to 25 phr or from 10 to 20 phr of one or more vinyl ether resins, acrylourethanes or acrylated polyesters.

Vinyl ethers generally comprise the following formula (2) 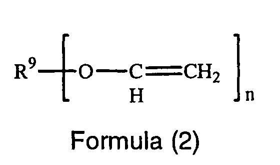 wherein R⁹ is selected from the group consisting of aromatic, aliphatic, alicyclic hydrocarbons, ethers, polyethers, esters, polyesters, urethanes, polyurethanes, and combinations comprising at least one of the foregoing hydrocarbons and/or polymers; and n = 1-4. Vinyl ethers, like epoxy resins, may be cationically cured and may be combined with epoxy resins to make chemically resistant coatings.

Curing via visible or UV radiation enables the powder coating of plastics and other heat sensitive substrates, e.g. wood or fiberboard, at temperatures no higher than the flow out temperature of the coating, which may range above the Tg of at least one coating resin, and up to 100°C. Cationic, free radical and photo- initiators may be used to cure powders via visible or UV radiation. Suitable cationic photoinitiators may include diaryliodonium salts, triaryliodonium salts, triarylsulfonium salts, copper synergists, and the like. An example of a cationic photoinitiator useful in the present invention includes CD-1012, a diphenyl iodonium (SbF₆) salt, from Sartomer, and ethyl triphenyl iodonium bromide (ETPPI). Suitable free radical photoinitiators include, for example, alpha cleavage photoinitiators, for example, benzoin, benzyl dimethyl ketal, acyl phosphines, such as diphenyl (2,4,6-trimethyl benzoyl) phosphine oxide, aryl ketones, such as 1-hydroxy cyclohexyl phenyl ketone, or 2-hydroxy ethoxyphenyl 2-hydroxy 2-methylpropane-1-one and dimethoxy phenyl acetophenone. An effective total amount of both the cationic photoinitiator and free radical photoinitiator may be greater than or equal to 0.1 phr, 0.5 phr or more, and 1 phr or more, and less than or equal to 10 phr, or 7.5 phr or less, 3 phr or less.

In addition, a powder coating may also include free-radical initiators, such as organic peroxide and azo compounds, in conjunction with the photoinitiators (otherwise referred to herein as "dual cure" powders). The inclusion of thermal free-radical initiators has been found to assist in curing near the substrate, particularly when pigmented, opaque, or thick film coatings are desired. To enhance cross-linking during UV, free radical, cationic or thermal cure, thermal catalysts may optionally be employed to increase the cross-linking rate of the base resin, including, for example, peroxides such as peroxy ketals, diacylperoxide, peroxy esters and peroxy carbonates, and transition metal compounds based on a fatty acid or oil, or tertiary amines, e.g. cobalt soaps, such as cobalt octoate, cobalt neodecanoate, cobalt naphthenate, cobalt octadecanoate, and magnesium salts. The amount of catalyst may be 1 part per hundred resin (phr) or less, or 0.75 phr or less, or 0.5 phr or less, and may be greater than or equal to 0.01 phr, or 0.05 phr or more, 0.1 phr or more.

Powder coating compositions may additionally comprise components such as catalysts, pigments, fillers, flow control agents, such as 2-hydroxy-1,2-diphenylethanone crystalline solid or acrylic oligomers, dry flow additives, anticratering agents, surfactants, texturing agents, such as rubber particles and organophilic clays, light stabilizers, matting agents, photosensitizers, wetting agents, anti-oxidants, plasticizers, opacifiers, stabilizers, and degassing. Suitable fillers may include include calcium carbonate, barium sulfate, wollastonite, mica, china clay, diatomaceous earth, benzoic acid, low molecular weight nylon, and combinations comprising at least one of the foregoing fillers. Suitable auxiliary pigments include, for example, titanium dioxide, iron oxide red, iron oxide yellow, phthalocyanine green, phthalocyanine blue, blue tone phthalocyanine green, yellow tone phthalocyanine green, green tone phthalocyanine blue, lamp black, carbon black, and combinations comprising at least one of the foregoing pigments.

Depending upon the desired film opacity and coloration of the resultant coating, the amount of fillers and/or pigments may range from 0 to 120 phr.

Matting agents in epoxy and hydroxyl functional polyester powder coating systems may include cyclic amidine and amidine salts, acid anhydride containing materials, such as polystyrene-co-methacrylates (SMA's)or other anhydride adducts of polystyrene, and polycarboxylic acid oligomers and polymers, such as acid functional acrylic copolymers. Matting effects may also be created by dry blending two powder coating compositions with different reactivities.

Suitable liquid coatings may comprise solventborne and waterborne coatings. These coatings can be thermoplastic, UV or radiation curable or thermosetting and may include acrylic, vinyl, urethane, alkyd, polyester, polyolefin polymers and blends thereof. Thermosetting coatings may suitably comprise curing agents having hydroxyl functionality, such as hydroxyl functional acrylics, polyether or polyester resins, and curing agents having amine functionality, such as aminoplasts, e.g. melamine-formaldehyde resins, urea formaldehyde resin, benzoguanamine resins, and isocyanate and blocked isocyanate curing agents. Hydroxyl functional curing agents may be used to cure urethane resins, alkyds, and acid functional acrylic and polyester resins. Amine functional, aminoplast, and isocyanate curing agents may be used to cure hydroxyl functional urethanes, polyesters and acrylics. UV curable coatings may comprise one or more than one acrylic terminated polyester and urethane polymers.

Liquid formulations may contain commonly used solvents such as aromatic hydrocarbons, alcohols, aliphatic hydrocarbons, ketones, esters, glycol ethers, glycol ether esters, lactams and blends. Waterbome coatings may contain solvents, for example n-methyl-2-pyrrolidinone (NMP), as co-solvents in the amount of 0.5 to 10 wt. %, based on the total weight of the coating.

Liquid formulations may contain pigments, fillers, catalysts, accelerators and stabilizing agents, including surfactants, commonly used in coating formulations. Further, optional rheological additives, such as associative thickeners, flatteners and fillers can be added to impart required appearance and gloss. Other additives, such as silicone oils, fluorocarbon polymers, polyolefin and PTFE waxes may be added to impart slip, mar resistance and wet out properties. Thickeners and rheological additives may desirably be added to liquid clear coats to optimize appearance.

Coating compositions, whether powder or liquid, may comprise 1 phr or more, for example, 2 phr or more, or 5 phr or more of one or more magnetic pigments, and may comprise 30 phr or less, or 20 phr or less or 20 phr or less of one or more magnetic pigments.

Suitable magnetic pigments may include finely divided magnetic pigments of any shape, e.g. spherical, flake, needle, polygonal, rod and platelet shaped particles and multilayer pigments, as well as particles having random and irregular shapes. Examples of suitable pigments include pigments comprising soft magnet materials such as nickel, cobalt, iron, gadolinium, ytterbium, dysprosium, erbium, and their alloys or oxides, iron oxides, stainless steel, mica coated with a mixture of soft magnet materials, mixtures thereof, and the like. A suitable magnetic pigment may be, for example, mica coated with a polymer mixture containing cobalt iron oxide and a cobalt oxide, known as Exterior Vegetable Black Olive 0C03Z, from Engelhard Corp., Iselin N.J. Further, a suitable reflective magnetic flake ("RMF") pigment may be used to create markings having lustrous highlights or outlines. Still further, interference pigments, such as color shifting pigments, may be used in one or more than one coating layers such that when the one or more than one coating layer is exposed to a magnetic field, the interference pigments create markings that vary in color, vary in color intensity, appear to have different colors when viewed from different angles, or any combination thereof. Suitable interference pigments may include, for example, CHROMAFLAIR™ light interference pigments from Flex Products, Inc., Santa Rosa, CA.

Suitable soft magnetic materials used to pigments of the invention have a coercivity of less than about 2000 Oe, more preferably less than about 300 Oe. Coercivity refers to the ability of a material to be de-magnetized by an external magnetic field. Accordingly, coatings comprising soft magnetic materials may not be magnetic in response to unmagnetized metals, such as steel, brass or aluminum.

RMFs may comprise a three layer design having a generally symmetrical thin film structure with a central magnetic layer and at least one reflector layer, on either or both of the opposing major surfaces of the central magnetic layer. Reflector layers may comprise one or more metals, one or more metal alloys, or combinations thereof, although non-metallic reflective materials could also be used. Non-limiting examples of suitable metallic materials for the reflector layers include aluminum, silver, copper, gold, platinum, tin, titanium, palladium, nickel, cobalt, rhodium, niobium, chromium, and combinations or alloys thereof. By inserting the magnetic layer between highly reflective reflector layers, such as aluminum, the optical properties of the reflector layers are not degraded and the flake remains highly reflective. In any pigment or pigment layer, the magnetic material may be selected for its reflecting properties when present in a thickness so that it is substantially opaque. The magnetic material may further be used as an absorber when present in a thickness so that it is not substantially opaque. One suitable example of an RMF according to the invention has the coating structure: aluminum/magnetic core/aluminum. An RMF may be used as a pigment flake or as a core section with additional layers applied thereover, such as in a color shifting pigment.

Color shifting pigments comprise interference layers having substantial shifts in chroma and hue with changes in the angle of incident light or viewing angle of an observer, known as goniochromaticity, optical variability, or "color shift." For example, suitable pigment flakes may exhibit a first color at a first angle of incident light or viewing and a second color different from the first color at a second angle of incident light or viewing. The color shifting effects create three dimensional-like effects in the coatings of the present invention. Such pigment comprise both interference and non-interference layers in multilayer thin film flakes that contain magnetic materials. The coating structure of color shifting flakes may include one or more reflector layers, one or more dielectric layer overlying the reflector layer, and one or more absorber layer overlying the dielectric layer, or it may comprise two magnetic layers sandwiching a dielectric layer (a composite magnetic particle, or CMP). In color shifting pigments, the one or more highly reflective layer preserves high luster, brightness and chromaticity; the dielectric layers act as spacers in the thin film stack structure of the pigment and have an effective optical thickness to impart interference color and desired color shifting properties.

The one or more magnetic layer in a color shifting pigment can be formed of any suitable soft magnet material, such as a cobalt nickel alloy comprising from 70 to 90 wt. % cobalt and from 10 to 30 wt. % nickel. Other examples of magnetic alloys may include Fe/Si, Fe/Ni, FeCo, Fe/Ni/Mo, and combinations thereof. Hard magnets, such as SmCo 5, Al--Ni--Co, and combinations thereof, can also be used, as well as spinel ferrites, such as Fe3O4, or garnets, such as YIGa. However, soft magnets show a quick response to an applied magnetic field, but retain very low (coercive fields (He)=0.05-300 Oersteds (Oe)) or zero magnetic signatures, or retain very low magnetic lines of force after the magnetic field is removed. Soft magnetic materials used to form magnetic layers in the pigments of the invention have a coercivity of less than about 2000 Oe, more preferably less than about 300 Oe. Coercivity refers to the ability of a material to be de-magnetized by an external magnetic field.

The dielectric layers in a color shifting pigment may optionally be clear and may be high refractive index (H) or low refractive index (L) materials. Each dielectric layer may itself comprise several layers of one or more dielectric materials, e.g. HLH, HLL, LH or HL to create a desired angle of incidence for a color shift or to create more or less light refraction, hence more or less color effect in the overall pigment. Examples of suitable high refractive index materials for the dielectric layer include zinc sulfide (ZnS), zinc oxide (ZnO), zirconium oxide (ZrO₂), titanium dioxide (TiO₂), ferric oxide (Fe₂O₃), silicon monoxide (SiO), tin oxide (SnO₂), and combinations thereof. Suitable low refractive index materials for the dielectric layer include silicon dioxide (SiO₂), aluminum oxide (Al₂O₃), metal fluorides such as magnesium fluoride (MgF₂), aluminum fluoride (AlF₃), sodium aluminum fluorides (e.g., Na₃AlF₆ or Na₅Al₃Fi₄), barium fluoride (BaF₂), calcium fluoride (CaF₂), lithium fluoride (LiF), combinations thereof, or any other low index material having an index of refraction of 1.65 or less, such as, organic monomers and polymers, including dienes or alkenes, acrylates (e.g., methacrylate), perfluoroalkenes, polytetrafluoroethylene, fluorinated ethylene propylene (FEP), combinations thereof, and the like. It should be appreciated that several of the above-listed dielectric materials are typically present in non-stoichiometric forms, often depending upon the specific method used to deposit the dielectric material as a coating layer, and that the above-listed compound names indicate the approximate stoichiometry. For example, silicon monoxide and silicon dioxide have nominal 1:1 and a 1:2 silicon:oxygen ratios, respectively, but the actual silicon:oxygen ratio of a particular dielectric coating layer varies somewhat from these nominal values.

Powder coating compositions may be formulated by extruding all ingredients together in one or two parts, with the optional exception of dry flow additives. Two part powder coating compositions may be formulated by extruding resins or polymers and curing agents or other co-reactive components separately, with each part comprising any desirable additional ingredients.

Liquid coatings may be formulated in one or in two parts by mixing or shearing, e.g. with a Cowles blade, one or more polymer or resin dispersion, emulsion or solution with any desired wet or dry ingredients. Alternatively, all ingredients may be admixed or dispersed in dry form into a water or solvent media to form a polymer or resin dispersion, emulsion or solution. Two part liquid coatings can be formulated in the same manner as one part liquid coatings, with each part comprising any desirable additional ingredients and with one part comprising one or more than one polymer or resin and the second part comprising any of one or more co-reactive curing or crosslinking agent, polymer or resin.

Powder coatings may be applied via electrostatic spray guns, fluidized beds, or magnetic brushes and may be cured via UV lamps, such as medium power mercury lamps, or they may be thermally cured for a period of from 2 to 45 minutes, for example from 10 to 30 minutes, at 90°C or higher, for example, 100°C or higher, and as high as 250°C for heat resistant powder coatings, or as high as 200°C for epoxy and polyester coatings. In the case of UV cure, powder coatings are flowed out for from 1 to 15 minutes under an infrared (IR) lamp or in a convection oven so that the substrate surface reaches the Tg of the highest Tg resin in the powder coating, but not higher than 110°C.

Liquid coatings may be applied via electrostatic spray guns or pneumatic spray guns and may be cured via UV lamps, such as medium power mercury lamps, or they may be thermally cured for a period of from 2 to 60 minutes, for example from 10 to 45 minutes, at 75°C or higher, for example, 80°C or higher, or 100°C or higher, and as high as 150°C.

Cured powder coatings, layers or films may range from 0.75 mil (19.05 µm) to about 6 mil (152.4 µm) thick. A multilayer powder coating having two to three layers may range from 1.5 mil (38.1 µm) to 10 mil (254 µm) thick. Cured liquid coatings, layers or films may range from 0.25 mil (6.35 µm) to about 4 mil (101.6 µm) thick. A multilayer liquid coating having two to four layers may range from 0.75 mil (19.05 µm) to 6 mil (152.4 µm) thick.

Marked coated products coated according to the present invention may include vehicles, such as automobiles, trucks and buses; automotive plastic, glass and metal parts, such as glove box doors, headlamps, wheels and hubcaps, tire sidewalls, interior and exterior molding, airbags, car logos for both interior and exterior use, bumpers, key fobs, plastic or metal plates for logos on upholstery, mirror shells, door handles, splash guards, interior or exterior pillars, grilles and exterior fascia, and roof and ski racks. Other marked products may include golf carts and clubs, motorcycle parts, such as gas tanks, road and highway signs, computers and other electronics devices, such as pagers, cell phones, pdas, stereo equipment, boom boxes, printers and copiers, television and computer monitor cases, toys, books, packaging and print media.

### EXAMPLE 1 - Formation of Three-Dimensional Designs in Magnetic Pigment Containing Powder Coatings

As shown in the following Table 1, a GMA (glycidyl methacrylate copolymer) based clearcoat powder was mixed with a magnetic pigment in the given proportions.

**TABLE 1:**

| Powder Clearcoat Formulation | |
|---|---|
| **Ingredient** | **Weight %** |
| Copolymer of methylmethacrylate, glycidyl methacrylate (GMA), styrene, and n-butyl methacrylate | 74.41 |
| Bisphenol A epoxy -co-polyglycol epoxy resin | 3.62 |
| Sebacic acid crosslinker | 15.95 |
| 2-(2H-benzotriazol-2-yl)-4,6-bis(1-methyl-1-phenylethyl)phenol (UV absorber) | 1.81 |
| Dimethyl succinate polymer with 4-hydroxy-2,2,6,6-tetramethyl-1-piperidine ethanol (Light stabilizer) | 0.90 |
| Tetrakis[methylene(3,5-di-(tert)-butyl-4-hydroxyhydrocinnamate)]methane (Antioxidant) | 0.09 |
| Tris(2,4-di-(tert)-butylphenyl) phosphite (Antioxidant) | 0.09 |
| Organic amide modified polyether oligomer (Outgassing agent) | 1.81 |
| Polymeric surfactant (Outgassing agent) | 0.90 |
| Benzoin (Outgassing agent) | 0.22 |
| Hydrophobic fumed silica surface treated with dimethyl dichlorosilane (Dry flow aid) | 0.20 |
| TOTAL POWDER CLEARCOAT | 100.00 |
| Platelets of mica coated with Cobalt Iron Oxide, Cobalt Oxide and polymer (Dark Gray Magnetic pigment) | 2.00 |

### Procedure:

The mixture of powder and pigment was bag blended for 5 minutes and then scalped using a 140 mesh (106 µm) sieve.

Three 0.187" (4.75mm) thick 4" x 4" (101.6mm X 101.6mm) PLASTIFORM™ 1202 single pole magnetic sheets, available from ARNOLD™ Magnetic Products Group of SPS Technologies, Norfolk, Nebraska, were cut into various designs, including a Rohm and Haas Company beaker, a smiley face and, in addition, where more than one piece of a magnet was used, the magnets were then rearranged to produce a triangle.

Conductive carbon black filled plastic substrate panels were baked for 5 minutes at 350°F (177°C) to reduce out gassing of each substrate the substrate panels and were then allowed to cool prior to applying the powder coating. Each of the magnet designs was then placed behind a conductive carbon black filled plastic substrate panel prior to applying the powder coating.

The powder was applied using a corona charged electrostatic spray gun, including the use of a conical nozzle. Application settings were as follows: flow rate 10 p.s.i ; atomizing = 10 p.s.i.; KV = 30. The panels were then coated with the magnetic powder clearcoat to a dry film thickness (DFT) of 2.0 to 2.5 mils (50.8 to 63.5 µm).

The coated plastic panels, with the magnet affixed to the back of the panels, were then baked out for 15 minutes at 325 °F (163°C).

The desired *in situ* marking effect was successfully produced in each of the magnet designs tested. The design in each of the resulting coatings appeared three-dimensional. Accordingly, *in situ* magnetic markings can be produced in a powder coating.

### EXAMPLE 2 - Formation of Designs with Variable Colors in Liquid Coatings Containing Magnetic Interference Pigments

A basecoat comprising a dark gray magnetic pigment and a silver green interference pigment and having a clearcoat overlay was tested on acrylonitrile butadiene styrene (ABS) to show the effect of interference pigments in *in situ* magnetically marked coatings.

**TABLE 2:**

| Basecoat Formulation | |
|---|---|
| **INGREDIENT** | **Wt. %** |
| Polyester resin (25.5 wt.%), Acrylic resin (18.2 wt.%), Cellulose Acetate Butyrate (0.87 wt.%) containing Dibutyl Tin Dilaurate accelerator (0.13 wt. %) solvent dispersion (NVM¹ 44.7%) in methyl ethyl ketone (MEK)/propylene glycol methyl ether acetate/toluene/methyl N-amyl ketone/isobutyl acetate (18.53 wt.%/12.09 wt.%/10.65 wt.%/9.97 wt.%/4.06 wt.%) | 55.61 |
| Acrylic resin (50 wt.%) solvent dispersion in a 1:1 (w/w) mixture of isobutyl acetate and primary amyl acetate | 5.08 |
| Thixotrope: benzyl dialkyl ammonium treated montmorillonite clay filler (7.5 wt.%) in an Acrylic resin (46.25 wt.%) solvent dispersion in propylene glycol methyl ether acetate/primary amyl acetate/isobutyl acetate (11.56 wt.%/11.56 wt.%/23.13 wt.%) | 9.34 |
| Titanium Dioxide white pigment (20.0 wt.%) and silicon dioxide pigment (0.2 wt.%) in an Acrylic resin (60.8 wt.%) solvent dispersion containing polymeric dispersant (1.4 wt%) in primary amyl acetate/isobutyl acetate (8.7 wt.%/8.9 wt.%) | 1.03 |
| Paliogen blue pigment (15.45 wt.%) in an Acrylic resin (43.35 wt.%) solvent dispersion in propylene glycol methyl ether acetate/primary amyl acetate/isobutyl acetate (10.80 wt.%/10.80 wt.%/19.60 wt.%) | 1.74 |
| Phthalocyanine blue pigment (9 wt.%) in an Acrylic resin (43.2 wt.%) solvent dispersion containing polymeric dispersant (3.8 wt%) in propylene glycol methyl ether acetate/primary amyl acetatersobutyl acetate (11 wt.%/11 wt.%/22 wt.%) | 4.48 |
| Carbon Black pigment (7.5 wt.%) in an Acrylic resin (45.6 wt.%) solvent dispersion in propylene glycol methyl ether acetate/primary amyl acetate/isobutyl acetate (11.75 wt.%/11.75 wt.%/23.40 wt.%) | 7.03 |
| Pot-life exterior solution (phenyl acid phosphate in MEK 50/50 w/w) | 0.61 |
| Dark gray magnetic pigment of magnetic mica platelets coated with cobalt iron oxide, cobalt oxide and polymer (avg. particle size of ≤ 12.7 µm) | 3.50 |
| 'Multilayer silver green light interference pigment (mean particle size of from 11 to 13 µm) | 3.50 |
| Acrylic microgel beads | 8.08 |
| **TOTAL BASECOAT** | 100.0 |
| Notes: ' Two layers of magnesium fluoride microflakes around an aluminum layer and two chromium outer layers. CHROMAFLAIR™ from Flex Products, Inc., Santa Rosa, CA. | |

### Procedure:

To form the basecoat, the polyester acrylic and acrylic dispersions in Table 2, and the thixotrope dispersion and white, blue and black pigment dispersions in Table 2 were mixed together in a vessel. Then the pot-life exterior solution in Table 2 was added under agitation, and the dry pigments in Table 2 were added and then mixed well under moderate agitation. The acrylic rheology modifier in Table 2 was then added slowly under moderate agitation to complete the basecoat formulation.

In a mixing vessel equipped with a stirrer, five (5) parts of the basecoat, given in Table 2 was mixed with one (1) part of a basecoat curing agent comprising 94.38 wt.%, based on total curing agent solids, of an aliphatic polyisocyanate based on hexamethylene diisocyanate (HDI) and 5.62 wt.%, based on total curing agent solids, of an aromatic polyisocyanate based on toluene diisocyanate (TDI), and with three (3) parts of methyl ethyl ketone (MEK) thinner.

Magnetic sheets having a magnetic strength of 600 to 700 Gauss, were cut into various designs. Each separate magnet design was attached to the back of a 2.54mm thick ABS substrate panel. The strength of the magnet, as measured through the substrate panel was 450 to 500 Gauss.

The basecoat mixture was applied to each of the ABS substrate panels having magnet designs attached to the back thereof. To this basecoat layer was applied ''wet-on-wet'' a clearcoat layer, as formulated in the following Table 3.

**Table 3:**

| Clearcoat Formulation | |
|---|---|
| **INGREDIENT** | **WT.%** |
| Primary amyl acetate | 23.55 |
| Acrylic copolymer rheology modifier | 5.24 |
| Acrylic Solution (60% NVM¹ in xylene (32 wt.%)/ethyl benzene (8 wt.%)) | 54.65 |
| Polyester solution (90% NVM in xylene (4 wt.%)/n-butyl acetate (5 wt.%)/ethyl benzene (1 wt.%)) | 12.78 |
| Mar and slip additive (12.5% NVM in xylene (45.2 wt.%)/ethyl benzene (22.3 wt.%)/ethylene glycol phenyl ether (20 wt.%)) | 0.49 |
| UV Absorber | 1.20 |
| Oxazoline | 1.04 |
| Oxalamide Derivative (UV absorber - 80% NVM in xylene (16 wt.%)/ethyl benzene (4 wt.%)) | 1.05 |
| TOTAL Clearcoat Resin | 98.04 |
| Curing Agent - Aliphatic polyisocyanate based on hexamethylene diisocyanate (HDI) (solids only) | 22.06 |
| **Thinner** 1:1 (w/w) Methyl ethyl ketone (MEK)/primary amyl acetate | 122.55 |
| **TOTAL Clearcoat formulation** | 242.62 |
| Notes: **NVM:** Non-volatile materials (wt. %) | |

The coated panels were "flashed" by allowing them to devolatilize at room temperature for 5 minutes. After flashing, the coatings on the coated ABS panels were baked out at 180°F (82.22°C) for 30 minutes with the magnet affixed to the back of the panels.

The resulting panels had *in situ* magnetically formed designs which turn green to red at different viewing angles. Accordingly, magnetically marked coatings containing interference pigments provide designs that appear differently colored or multi-colored, e.g. both green and red in different parts, at different viewing angles.

## Claims

1. A powder coating composition markable *in situ* comprising one or more than one curable or thermoplastic resin or polymer and one or more than one magnetic pigment.

2. A powder coating composition as claimed in claim 1, wherein the said composition comprises the said one or more than one magnetic pigment in the amount of from 1 part per hundred parts resin (phr) or more to 30 phr or less.

3. A powder coating composition as claimed in claim 1, wherein the said one or more than one magnetic pigment comprises an interference pigment.

4. A powder coating composition as claimed in claim 3, wherein said one or more than one interference pigment is chosen from one or more than one color shifting pigment, one or more than one reflective magnetic flake (RMF) pigment, and mixtures thereof.

5. A method of marking a substrate comprising
providing one or more than one magnet in a desired shape or form,
coating the said substrate with a powder coating composition as claimed in any one of claims 1 to 4,
while the said substrate is being powder coated or after it is powder coated and while the coating remains uncured, placing a magnet adjacent to the said substrate, thereby orienting or moving the said one or more than one magnetic pigment to form a desired shape, and
curing or heating to form a coating film.

6. A method as claimed in claim 5, wherein the said providing of the said one or more than one magnet in a desired shape or form comprises molding, cutting, grinding, lathing, milling, drilling or punching it into one or more than one desired shape.

7. A method as claimed in claim 6, wherein further the said one or more than one magnet in a desired shape or form comprises a polymer or rubber magnet having a desired profile that conforms to the front or rear surface of the said substrate.

8. A method as claimed in claim 6, wherein further the said one or more than one magnet in a desired shape or form comprises a sheet magnet.

9. A method of marking a substrate comprising
providing one or more than one magnet in a desired shape or form,
coating the said substrate with a liquid coating composition comprising a polymer or resin and one or more than one interference pigment,
while the said substrate is being coated or after it is coated and while the coating remains uncured, placing a magnet adjacent to the said substrate, thereby orienting or moving the said one or more than one interference pigment to form a desired shape, and
curing or heating to form a coating film.

10. A substrate coated with one or more than one layer of a coating having in *situ* one or more than one marking which, when viewed from different angles, varies in color, varies in color intensity, appears to have different colors, or any combination thereof.
